# EUROPEAN PATENT SPECIFICATION

(11) **EP 1 378 403 B1**
(45) Date of publication and mention of the grant of the patent: **21.09.2005**
(21) Application number: 02014532.2
(22) Date of filing: 01.07.2002
(51) Int. Cl.: B60R 19/34, B60R 19/18, B60R 19/14, B60R 19/46, B60R 21/34

(54) **Vehicle bumper device and method**
Stossfängeranordnung für Kraftfahrzeug und Verfahren
Dispositif pare-choc pour véhicule et procédé

(43) Date of publication of application: 07.01.2004
(73) Proprietor: Ford Global Technologies, Inc., Michigan 48126 (US)
(72) Inventor: Eriksson, Mattias, 43254 Varberg (SE)
(74) Representative: Hammond, Andrew David

(56) References cited:
- DE-A- 2 127 411
- DE-A- 10 031 526
- DE-C- 19 716 223
- US-A- 4 542 925

## Description

### Technical field

The present patent application relates to a vehicle bumper device in accordance with the preamble of claim 1 and a method in accordance with the preamble of claim 9. Particularly, the patent application relates to a vehicle bumper device having an impact face and a method for moving an object upwards and inwards in relation to a vehicle upon impact applied on an impact face of a vehicle bumper device attached to said vehicle.

### Background of the invention

Collisions between moving vehicles and pedestrians often occur at the front of the vehicle. Usually it is the lower body part of the pedestrians which then is first impacted and consequently subjected to deformation forces. The legs and knees of the pedestrians are in such collisions often seriously injured even at low speeds. Furthermore, there is a risk that the pedestrians end up beneath the car at collisions and are run over. In order to alleviate the injuries to pedestrians in the event of collisions, vehicle manufacturers have developed a number of different bumper devices intended to be mounted at the front of vehicles. Bumper devices also aim to reduce the speed impact to another car or for example a wall.

DE 21 27 411 describes a bumper device composed of a so-called profile strand , which at least partly is accommodated in a case. The profile strand is arched and has an apex part, from which a first shaft and a second shaft extend. A bulge of an end of the first shaft is attached to the case in a hinge-like manner and a bulge of an end of the second shaft is in removable contact with the case. In a non-loaded position the profile strand partly protrudes out of the case and then the apex part is positioned at a certain distance from the case. Upon impact, the strand may be rotated around the hinge-like attachment, whereby the bulge may be removed from its position in which it is in contact with the case and whereby the strand may be at least partly moved into the case. The distance that the strand may move from its non-loaded position and into the case is relatively long such that the progressive increase of the back formation pressure is relatively slow.

However, when using the bumper device according to DE 21 27 411 on a vehicle, a special type of case has to be mounted to the vehicle. The requirement to mount the special type of case implies that the bumper device is not easy to apply on all vehicles and it also affects the overall appearance of the vehicle. Furthermore, the bumper device according to DE 21 27 411 do not guide the impacted object in any direction, but is only acting for alleviating an impact experienced by an impacted object.

It is believed that pedestrians are more seriously injured if a collision with a car results in the pedestrians being knocked down onto the ground than if the pedestrians are directed upwards onto the bonnet by a bumper device. In order to reduce the injuries, it is therefore positive if bumper devices directs an impacted body upwards as soon as possible upon an impact. One bumper device, which guides an impacted body to be thrown upwards onto the bonnet is previously known through GB 2 321 624. This known bumper device has an upper fender part with a front impact face and a lower fender part having a buffer at the front. The upper and lower fender parts are either displaceable in relation to each other or are unified. The upper fender part is arranged to upon an impact at the impact face be displaced in a rearward direction and the lower fender part and the buffer are arranged to be displaced in a forward direction in relation to the moving car. Consequentially the bumper assembly then guides the impacted body to be thrown upwards and rearwards in relation to the moving car onto the bonnet.

The complex nature of the above mentioned bumper device with many parts interacting upon impacts result in a complex production procedure and the risk that the whole function of the bumper device is prevented if one of the parts interacting is damaged.

One object of the present invention is to provide an improved vehicle bumper device and method for upon impact of a body on a vehicle, aid in reducing injuries to the legs and knees. This object is achieved by means of a vehicle bumper device in accordance with the characterising portion of claim 1 and by means of a method in accordance with the characterising portion of claim 9.

Preferred embodiments are listed in the dependent claims.

### Description of drawings

In the following, the invention will be described in greater detail with reference to attached drawings, in which
Fig. 1 is a side view of a first embodiment of the bumper device,
Fig. 2 is a side view of the bumper device according to fig.1 following an impact,
Fig. 3 is a perspective view showing part of the front end of a car to which the bumper device is mounted,
Fig. 4 is a side end view of the bumper device mounted to the car according to fig.3,
Fig. 5 is a perspective view of a second embodiment of the bumper device,
Fig. 6 is a top view of the bumper device according to fig.5 following an impact of a small and a large object respectively.
Fig. 7 is a perspective view of a third embodiment of the bumper device.

### Description of embodiments

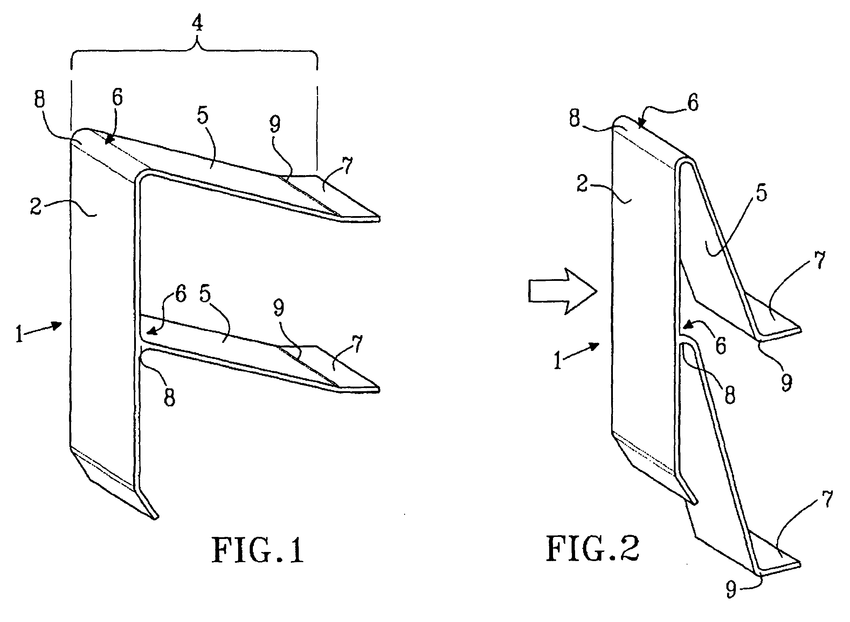

Fig 1 shows a side view of a first embodiment of a bumper device 1 according to the present invention. The bumper device 1 comprises an impact face 2, which constitutes the front part of the bumper device 1 and is intended to be mounted to a vehicle 3 in a forwardly protruding position. At collisions occurring at the front of the vehicle 3 it is thus the impact face 2 that is hit by the impacted object. The construction of the impact face 2 and its function together with other parts of the bumper device 1 in the event of an impact are therefore important to reduce injuries on the impacted object as much as possible.

In the first embodiment of the invention, as shown in fig 1 the impact face 2 is attached to the vehicle 3 in an essentially upright state, providing an upright front of the vehicle 3. An impact face 2 having an essentially upright state is believed to imply for an earlier start of an upward rotation of an impacted object compared to an inclined impact face.

The attachment of the impact face 2 to the front of the vehicle 3 is mediated through attaching means 4, which are arranged to upon impacts be moved upwards and inwards in relation to the vehicle 3 when mounted thereto. The attaching means 4 cause the impact face 2 to move upwards and inwards while maintaining the essentially upright state and thereby aid in rotating an impacted object upwards.

In the embodiment of the bumper device 1, as shown in fig 1, the attaching means 4 comprise two lateral attachment members 5 extending from the impact face 2 in a lateral direction to laterally connect the impact face 2 with the vehicle 3. In order to provide for the upwards and inwards movement, the lateral attachment members 5 are arranged to be slightly downwards inclined in relation to a transversal plane connecting the impact face 2 and the vehicle 3. The downward inclination of the lateral attachment members 5 implies that the impact face 2 only can be rotated upwards and therefore it also aids in preventing the impacted object from ending up beneath the vehicle.

Furthermore the attaching means 4 have distal end parts 6, 7, through which the attaching means 4 are connected to the impact face 2 and attached to the vehicle 3 respectively. The distal end parts 6, 7 also present areas 8,9, which are foldable and permit movement of the lateral attachment members 5 in relation to both the vehicle 3 and the impact face 2 while being respectively connected and attached thereto. The areas 8,9 permitting folding can for example comprise foldable notches.

As previously mentioned, it is often the legs and knees that are seriously injured in the event of a collision between a moving vehicle 3 and a pedestrian. However it is very important to try to protect the knees, since they are body parts which are very sensitive to injury. Therefore, the impact face 2 has such a height and is mounted to the vehicle 3 at such a height that a knee in a collision is likely to hit the impact face 2 with no part of the knee joint not covered by the impact face 2.

When for example a leg of a pedestrian hits the impact face 2 in a collision between a moving vehicle 3 and a pedestrian, the collision energy is used for moving the impact face 2 upwards and inwards in relation to the vehicle 3 and thereby directing the impacted leg to rotate upwards and inwards onto the bonnet. Such an upwards and inwards movement of the impact face 2 is mediated by the lateral attachment members 5, which permitted by the foldable areas 8,9 of the distal end parts 6,7 and the downwards inclination upon an impact rotates upwards and inwards while keeping the impact face 2 in an essentially upright state. A side view of the first embodiment of the bumper device 1 after an impact is shown in fig 2.

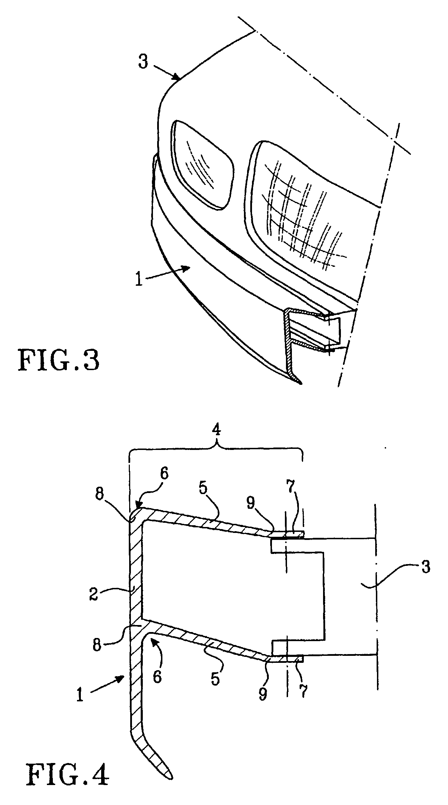

Fig 3 and fig 4 show a bumper device according to the invention mounted to a car in a perspective view and a side view respectively.

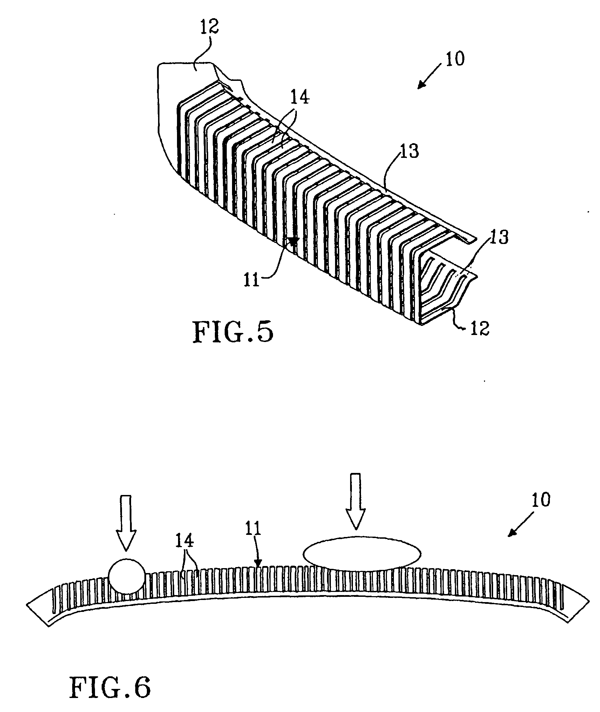

Fig 5 shows in a perspective view an alternative embodiment of a bumper device 10 combining pedestrian protection and low speed impact to for example a wall or another vehicle. The bumper device 10 comprises an impact face 11, which is intended to constitute the front part of the bumper device 10 and is intended to be mounted in a forwardly protruding position to the vehicle 3. The attachment of the bumper device 10 to the vehicle 3 is mediated through two lateral attachment members 12 extending in a lateral direction from the upper and lower end respectively of the impact face 11. The lateral attachment members 12 have distal end parts 13, which are mounting structures of the bumper device 10 and are mountable to the front of the vehicle 3.

Furthermore, the impact face 11 and the lateral attachment members 12, except for the distal end parts 13, of the alternative embodiment shown in fig 5 are constituted by rib-like lamellae 14, which are regularly spaced in the transverse direction of the bumper device 10. Each lamella 14 extend from one distal end part 13 to the other distal end part 13 and therefore follows and builds the structure of the bumper device 10.The size of the spacing between the lamellae 14 should be as small as possible, but has to provide that the lamellae 14 do not affect each other and the width of each lamellae should suitably not be larger than 50 mm.

The bumper device 10 is preferably made of a plastic material, which is deformable. The lamellae 14 are deformable independently of each other and the deformation occur toward the vehicle 3 by the lamellae 14 being pressed together. In the event of an impact on the impact face 11 the lamellae 14 are deformed absorbing the collision energy. The number of affected lamellae 14 and the degree of deformation depends on the area of the impacted object which contacts the impact face 11. The degree of deformation depends on the area of the impacted object which contacts the impact face, i e the number of affected lamellae 14.

At a collision with a relatively small object, for example a human leg, only a few lamellae 14 are affected. In such a case the affected lamellae 14 are highly deformed because the contact area with the impact face 11 is small and a few lamellae 14 have to absorb the collision energy. A relatively long braking distance and low deceleration of the impacted object is thus achieved and the forces exerted by the bumper device 10 on the impacted object are then reduced compared to a bumper with which a high deceleration is achieved. Therefore the bumper device 10 works as a soft bumper in collisions with small objects. A top view of such a collision is shown in fig 6.

Fig 6 also shows a top view of a collision with a large object. If a relatively large object, for example another vehicle or a wall, is involved in a collision, several lamellae 14 are affected due to the relatively large area of contact on the impact face 11. Then the collision energy is absorbed by several lamellae 14 implying that the lamellae 14 are only slightly deformed. Therefore the deformed lamellae 14 brake the impacted object with a short braking distance and high deceleration. Thus, the bumper device 10 acts as a stiff bumper to large objects.

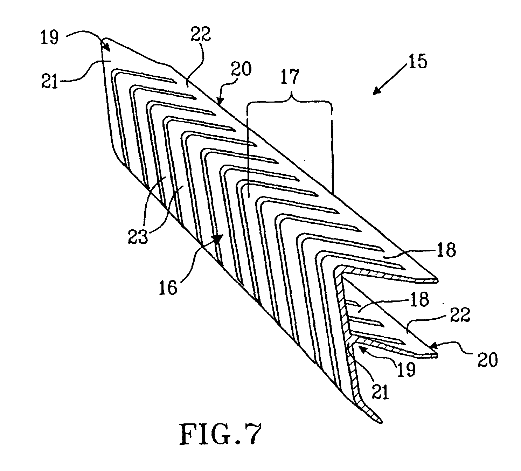

Yet a further embodiment of a bumper device 15 is shown in fig 7, which bumper device 15 constitutes a combination of the bumper device 1 and the bumper device 10. The bumper device 15 is constructed by the same parts as the bumper device 1, comprising an impact face 16 intended to be mounted to the front of the vehicle 3 in a forwardly protruding position. Furthermore the bumper device 15 comprises attaching means 17, which mediate the attachment of the impact face 16 to the vehicle 3. The attaching means 17 comprise lateral attachment members 18 extending in a laterally direction to laterally connect the impact face 16 with the vehicle 3 and distal end parts 19, 20 connected to the impact face 16 and attachable to the vehicle 3 respectively. The distal end parts 19, 20 comprise foldable areas 21, 22 to permit movement of the lateral attachment members 18 upwards and inwards in relation to the vehicle 3. The upwards and inwards movement of the lateral attachment members 18 upon an impact is provided by the lateral attachment members 18 being downwards inclined in relation to a transversal plane connecting the impact face 16 and the vehicle 3.

The impact face 16, the distal end parts 19 and the lateral attachment members 18 of the bumper device 15 are constituted by lamellae 23, which also are used to constitute the bumper device 10. The lamellae 23 are rib-like and are regularly spaced in the transverse direction of the bumper device 15. Each lamellae 23 extend from one of the distal end parts 20 to the other distal end part 20 following and building the structure of the bumper device 15. Furthermore, the lamellae 23 are deformable and contacted lamellae are highly deformed upon impacts with small objects and slightly deformed upon impacts with large objects. Thus the bumper device 15 acts as a soft bumper to small impacted objects and as a stiff bumper to large impacted objects.

In the event of a collision of the bumper device 15 with a small object, the collision energy is both absorbed by the few contacted lamellae 23, which thereby are relatively highly deformed, and used for upwards and inwards movement of the impact face 16 to aid in rotating the impacted object upwards and inwards. Thus the bumper device 15 then both acts as a soft bumper and as a bumper preventing the impacted object from ending up beneath the vehicle 3.

At collisions of the bumper device 15 with a large object, the collision energy is partly absorbed by the several contacted lamellae 23 and partly used to rotate the impact face 16 upwards. Therefore, the bumper device 15 then acts both as a stiff bumper and aid in rotating the impacted face 16 upwards.

The invention is not to be limited to the above described embodiments, but may be varied within the scope of the following claims.

## Claims

1. Vehicle bumper device (1,15) having an impact face (2,16), said impact face (2,16) is attachable to a vehicle (3) through attaching means (4,17) in an essentially upright state providing an essentially upright impact face surface, **characterised in, that** said attaching means (4,17) is arranged to upon impact cause said impact face (2,16) to move upwards and inwards in relation to said vehicle (3) while maintaining said essentially upright state of said impact face (2,16) throughout said movement.

2. Vehicle bumper device (1,15) according to claim 1, **characterised in that** said impact face (2,16) is a part adapted to be mounted in a forwardly protruding position in relation to said vehicle (3).

3. Vehicle bumper device (1,15) according to claim 1 or 2, **characterised in that** said attaching means (4,17) comprises at least one lateral attachment member (5,18) arranged to extend in a lateral direction in relation to said impact face (2,16).

4. Vehicle bumper device (1,15) according to claim 3, **characterised in that** said at least one lateral attachment member (5,18) is arranged to be slightly inclined in a downward direction in relation to a transversal plane connecting said impact face (2,16) and said vehicle (3).

5. Vehicle bumper device (1,15) according to anyone of claims 1-4, **characterised in that** said attaching means (4,17) comprises distal end parts (6,19) through which the attaching means (4,17) are connected to said impact face (2,16) and distal end parts (7,20) through which the attaching means (4,17) are attachable to said vehicle (3).

6. Vehicle bumper device (1,15) according to claim 5, **characterised in that** each distal end part (6,7,19,20) present an area (8,9,21,22) arranged to permit folding.

7. Vehicle bumper device (1,15) according to claim 6, **characterised in that** said areas (8,9,21,22) arranged to permit folding comprises a foldable notch.

8. Vehicle bumper device (15) according to anyone of claims 1-7, **characterised in that** at least said impact face (16) is constituted by deformable lamellae (23) being regularly spaced, which lamellae (23) each extends over substantially the entire impact face (16) in a vertical direction.

9. Method for moving an object upwards and inwards in relation to a vehicle (3) upon impact applied on an impact face (2,16) of a vehicle bumper device (1,15) attached to said vehicle (3), whereby said impact face (2,16) is attached to said vehicle (3) through attaching means (4,17) in an essentially upright state providing an essentially upright impact face surface, **characterised in, that** said attaching means (4,17) is rotated upwards and inwards in relation to said vehicle (3) upon impact on said impact face (2,16) while moving said impact face (2,16) inwards and upwards in an essentially upright state throughout said movement.

10. Method according to claim 9, **characterised in that** deformable lamellae (23) constituting at least said impact face (16) are deformed upon an impact on said impact face (16), which lamellae (23) are highly deformed upon a collision with a small object and slightly deformed upon a collision with a large object.

## Patentansprüche

1. Fahrzeugstoßfängervorrichtung (1, 15), die eine Aufprallfläche (2, 16) hat, wobei die Aufprallfläche (2, 16) an einem Fahrzeug (3) durch Anbringeinrichtungen (4, 17) in einem im Wesentlichen aufrechten Zustand anbringbar ist unter Bildung einer im Wesentlichen aufrechten Aufprallflächenoberfläche,
**dadurch gekennzeichnet, dass**
die Anbringeinrichtungen (4, 17) so angeordnet sind, dass sie bei einem Aufprall bewirken, dass sich die Aufprallfläche (2, 16) in Bezug auf das Fahrzeug (3) aufwärts und einwärts bewegt, während gleichzeitig der im Wesentlichen aufrechte Zustand der Aufprallfläche (2, 16) während dieser gesamten Bewegung beibehalten wird.

2. Fahrzeugstoßfängervorrichtung (1, 15) nach Anspruch 1,
**dadurch gekennzeichnet, dass**
die Aufprallfläche (2, 16) ein Teil ist, das ausgebildet ist, um in einer nach vorn vorspringenden Position in Bezug auf das Fahrzeug (3) angebracht zu werden.

3. Fahrzeugstoßfängervorrichtung (1, 15) nach Anspruch 1 oder 2,
**dadurch gekennzeichnet, dass**
die Anbringeinrichtungen (4, 17) mindestens ein seitliches Anbringelement (5, 18) aufweisen, das so angeordnet ist, dass es sich in einer seitlichen Richtung in Bezug auf die Aufprallfläche (2, 16) erstreckt.

4. Fahrzeugstoßfängervorrichtung (1, 15) nach Anspruch 3,
**dadurch gekennzeichnet, dass**
das mindestens eine seitliche Anbringelement (5, 18) so angeordnet ist, dass es in einer Abwärtsrichtung in Bezug auf eine die Aufprallfläche (2, 16) und das Fahrzeug (3) verbindende Transversalebene geringfügig geneigt ist.

5. Fahrzeugstoßfängervorrichtung (1, 15) nach einem der Ansprüche 1 bis 4,
**dadurch gekennzeichnet, dass**
die Anbringeinrichtungen (4, 17) aufweisen: distale Endteile (6, 19), durch welche die Anbringeinrichtungen (4, 17) mit der Aufprallfläche (2, 16) verbunden sind, und distale Endteile (7, 20), durch welche die Anbringeinrichtungen (4, 17) an dem Fahrzeug (3) anbringbar sind.

6. Fahrzeugstoßfängervorrichtung (1, 15) nach Anspruch 5,
**dadurch gekennzeichnet, dass**
jeder distale Endteil (6, 7, 19, 20) einen Bereich (8, 9, 21, 22) bildet, der ausgebildet ist, um ein Umklappen zuzulassen.

7. Fahrzeugstoßfängervorrichtung (1, 15) nach Anspruch 6,
**dadurch gekennzeichnet, dass**
die Bereiche (8, 9, 21, 22), die ausgebildet sind, um ein Umklappen zuzulassen, eine umklappbare Nut aufweisen.

8. Fahrzeugstoßfängervorrichtung (15) nach einem der Ansprüche 1 bis 7,
**dadurch gekennzeichnet, dass**
mindestens die Aufprallfläche (16) von verformbaren Lamellen (23) gebildet ist, die regelmäßig beabstandet sind, wobei sich die Lamellen (23) jeweils in einer Vertikalrichtung im Wesentlichen über die gesamte Aufprallfläche (16) erstrecken.

9. Verfahren zum Aufwärts- und Einwärtsbewegen eines Objekts in Bezug auf ein Fahrzeug (3) bei einem Aufprall, der auf eine Aufprallfläche (2, 16) einer an dem Fahrzeug (3) angebrachten Fahrzeugstoßfangervorrichtung (1, 15) angebracht wird, wobei die Aufprallfläche (2, 16) an dem Fahrzeug (3) durch Anbringeinrichtungen (4, 17) in einem im Wesentlichen aufrechten Zustand angebracht ist unter Bildung einer im Wesentlichen aufrechten Aufptallflächenobetfläche,
**dadurch gekennzeichnet, dass**
die Anbringeinrichtungen (4, 17) bei einem Aufprall auf die Aufprallfläche (2, 16) in Bezug auf das Fahrzeug (3) aufwärts und einwärts gedreht werden, während gleichzeitig die Aufprallfläche (2, 16) während dieser gesamten Bewegung in einem im Wesentlichen aufrechten Zustand einwärts und aufwärts bewegt wird.

10. Verfahren nach Anspruch 9,
**dadurch gekennzeichnet, dass**
verformbare Lamellen (23), die mindestens die Aufprallfläche (16) bilden, bei einem Aufprall auf die Aufprallfläche (16) verformt werden, wobei die Lamellen (23) bei einer Kollision mit einem kleinen Objekt stark verformt werden und bei einer Kollision mit einem großen Objekt geringfügig verformt werden.

## Revendications

1. Dispositif formant pare-chocs de véhicule (1, 15) ayant une face d'impact (2, 16), ladite face d'impact (2, 16) pouvant être fixée sur un véhicule (3) à travers des moyens de fixation (4, 17) dans un état sensiblement droit, en fournissant une surface de face d'impact sensiblement droite, **caractérisé en ce que** lesdits moyens de fixation (4, 17) sont agencés pour, lors d'un impact, amener ladite face d'impact (2, 16) à se déplacer vers le haut et vers l'intérieur par rapport audit véhicule (3), tout en maintenant ledit état sensiblement droit de ladite face d'impact (2, 16) d'un bout à l'autre dudit déplacement.

2. Dispositif formant pare-chocs de véhicule (1, 15) selon la revendication 1, **caractérisé en ce que** ladite face d'impact (2, 16) est une pièce adaptée pour être montée dans une position faisant saillie vers l'avant par rapport audit véhicule (3).

3. Dispositif formant pare-chocs de véhicule (1, 15) selon la revendication 1 ou 2, **caractérisé en ce que** lesdits moyens de fixation (4, 17) comportent au moins un élément de fixation latéral (5, 18) agencé pour s'étendre dans une direction latérale par rapport à ladite face d'impact (2, 16).

4. Dispositif formant pare-chocs de véhicule (1, 15) selon la revendication 3, **caractérisé en ce que** ledit au moins un élément de fixation latéral (5, 18) est agencé pour être légèrement incliné dans une direction vers le bas par rapport à un plan transversal, connectant ladite face d'impact (2, 16) et ledit véhicule (3).

5. Dispositif formant pare-chocs de véhicule (1, 15) selon l'une quelconque des revendications 1 à 4, **caractérisé en ce que** lesdits moyens de fixation (4, 17) comportent des parties d'extrémité distale (6, 19) à travers lesquelles les moyens de fixation (4, 17) sont connectés à ladite face d'impact (2, 16), et des parties d'extrémité distale (7, 20) à travers lesquelles les moyens de fixation (4, 17) peuvent être fixés sur ledit véhicule (3).

6. Dispositif formant pare-chocs de véhicule (1, 15) selon la revendication 5, **caractérisé en ce que** chaque partie d'extrémité distale (6, 7, 19, 20) présente une zone (8, 9, 21, 22) agencée pour permettre un pliage.

7. Dispositif formant pare-chocs de véhicule (1, 15) selon la revendication 6, **caractérisé en ce que** lesdites zones (8, 9, 21, 22) agencées pour permettre un pliage comportent une encoche pliable.

8. Dispositif formant pare-chocs de véhicule (15) selon l'une quelconque des revendications 1 à 7, **caractérisé en ce que** au moins ladite face d'impact (16) est constituée par des lamelles déformables (23) espacées de manière régulière, lesquelles lamelles (23) s'étendent chacune sur sensiblement toute la face d'impact (16) dans une direction verticale.

9. Procédé pour déplacer un objet vers le haut et vers l'intérieur par rapport à un véhicule (3) lors d'un impact appliqué sur une face d'impact (2, 16) d'un dispositif formant pare-chocs de véhicule (1, 15) fixé sur ledit véhicule (3) de sorte que ladite face d'impact (2, 16) soit fixée sur ledit véhicule (3) à travers des moyens de fixation (4, 17) dans un état sensiblement droit, en fournissant une surface de face d'impact sensiblement droite, **caractérisé en ce que** lesdits moyens de fixation (4, 17) sont mis en rotation vers le haut et vers l'intérieur par rapport audit véhicule (3) lors d'un impact sur ladite face d'impact (2, 16), tout en déplaçant ladite face d'impact (2, 16) vers l'intérieur et vers le haut dans un état sensiblement droit d'un bout à l'autre dudit déplacement.

10. Procédé selon la revendication 9, **caractérisé en ce que** des lamelles déforrnables (23) constituant au moins ladite face d'impact (16) sont déformées lors d'un impact sur ladite face d'impact (16), lesquelles lamelles (23) sont fortement déformées lors d'une collision avec un petit objet, et sont peu déformées lors d'une collision avec un grand objet.
